# EUROPEAN PATENT SPECIFICATION

(11) **EP 2 905 216 B1**
(45) Date of publication and mention of the grant of the patent: **20.12.2017**
(21) Application number: 14154181.3
(22) Date of filing: 06.02.2014
(51) Int. Cl.: B63B 35/00

(54) **Vessel for transporting a tubular element to an offshore location**
Schiff zum Transport eines röhrenförmigen Elements an einen Offshore-Standort
Récipient destiné à transporter un élément tubulaire vers un emplacement offshore

(43) Date of publication of application: 12.08.2015
(73) Proprietor: Seaway Heavy Lifting Engineering B.V., 2719 ER Zoetermeer (NL)
(72) Inventor: Hoeksema, Wouter, 2719 ER Zoetermeer (NL); van Dalen, Wouter Reinder, 2719 ER Zoetermeer (NL); Breedeveld, Johannes-Petrus, 2719 ER Zoetermeer (NL)
(74) Representative: Weal, Emily Teresa

(56) References cited:
- WO-A1-01/34977
- US-A1- 2009 191 002
- US-A1- 2011 139 056
- US-A1- 2012 266 796
- US-A1- 2013 051 924

## Description

### Field of the invention

The present invention relates to a vessel for transporting a tubular element, such as a mast or a tower of a wind turbine or a so-called transition piece (TP), to an offshore location, the vessel comprising a deck with a securing surface to which a securing device is connected, the securing device having a base element for connecting the securing device to the deck of the vessel. Moreover, the present invention also relates to an assembly of such a vessel and a tubular element as well as a method for securing a tubular element on the vessel.

### Background of the invention

A vessel according to the pre-amble of claim 1 and comprising securing devices, such as holding systems having hydraulic actuators for securing a wind turbine for transporting the wind turbine to an offshore location is known from.

In WO 2011/110818, a vessel for transporting offshore wind turbines to an offshore location is described, comprising a deck with a securing surface upon which a securing device is connected, wherein the securing device is an structure comprising a frame located around the outer circumference of the mast of the wind turbine and an orientation assembly configured to communicate with hydraulic actuators such as clamps directly clamping to the outside periphery of the wind turbine mast as to fix the wind turbine mast when in onshore and/or in offshore location and also during transport of the wind turbine mast.

The known vessel has a disadvantage that the securing structure takes a lot of space on the deck of the vessel due to the fact that the known structure is positioned around the outer periphery of the wind turbine mast, so the number of wind turbines that can be transported on the deck of the vessel is limited. Moreover, the known securing structure is exposed to the outside environment and may therefore get damaged. Furthermore, the safety of the vessel crew is decreased due to the fact that the stability of the securing structure and of the wind turbine mast can be compromised by the above-mentioned factors.

It is an object of the present invention to provide a vessel having a securing device for holding a tubular element, such as a mast of a wind turbine or a transition piece, on a deck of a vessel, wherein the use of space on the deck of the vessel is minimized.

It is a further object of the invention to provide a vessel for securing a tubular element on a vessel, wherein the tubular element can be safely transported to the offshore location on the deck of the vessel.

### Summary of the invention

Hereto, the vessel according to the invention is characterized in that the clamping elements are arranged at a location on a circumferential outer surface of the upstanding element for engaging the inner wall of a tubular element having an internal diameter larger than an external diameter of the upstanding element, when the upstanding element is inserted into a lower part of the tubular element and when the clamping elements are in an extended position.

Advantageously, by inserting the upstanding element into the lower part of the tubular element, i.e. by arranging the tubular element onto and over the upstanding element, use of deck space is minimized due to the absence of structures at the outer circumference of the tubular element. Furthermore, the clamping elements provide a great deal of flexibility in wild sea states, e.g. the clamping elements may automatically adapt to forces due to the fact that the clamping members can expand or retract depending on exterior forces transmitted thereto by the tubular element. Additionally, due to the upstanding element and the clamping elements being surrounded by the
tubular element during transport, external conditions hardly degrade the structural integrity and operational availability of the securing device.

An embodiment relates to an aforementioned vessel, wherein a retraction/extension distance between the rectracted and extended positions of the clamping elements lies in the range of 0.1 - 5.0 m. In this way a large variety of tubular elements (as found in the offshore field) can be accommodated by the securing device.

An embodiment relates to an aforementioned vessel, wherein the clamping elements are hydraulic clamping elements. Extension and retracting of the clamping elements by means of hydraulics ensures safe and reliable operation thereof. Furthermore, shocks in radial direction can be conveniently absorbed without damaging the extension mechanism as a whole.

An embodiment relates to an aforementioned vessel, wherein the clamping elements are self-expanding clamping elements or motorized clamping elements. Advantageously, this provides a simple actuating system that can be easily operated and controlled, while being cost-effective.

An embodiment relates to an aforementioned vessel, wherein the base element extends in a plane parallel to the deck of the vessel and has a grille structure or grillage comprising several connecting points for connecting the securing device to the deck. By having a grille structure the different forces acting on the upstanding element, especially bending moments, can be distributed to the deck of the vessel in an efficient manner, while the space required for such a base element is relatively small.

An embodiment relates to an aforementioned vessel, wherein the hydraulic clamping elements comprise a resilient element at their outer ends for engaging the inner wall of the tubular element (in many situations, however, a rigid element instead of a resilient element is preferable). The resilient element may contain any suitable polymeric material, for instance a polyutherane or other polymeric or rubber materials. Moreover, the resilient element can have a shape and size adapted to the geometry of the tubular element. It should be noted that the size of the resilient element will also depend on the number of hydraulic clamping elements and the distance between each of the hydraulic clamping elements, or the distance between the upstanding element and the inner diameter of the tubular element. By means of example, the amount of clamping members may amount to 4-12, preferably 8. The clamping members themselves are preferably evenly distributed along the circumference of the upstanding element.

An embodiment relates to an aforementioned vessel, wherein the upstanding element is a tubular upstanding element. In this manner, a smooth interaction between the tubular element of and the upstanding element can be achieved, due to the fact that the shape of both elements will match. The inner wall of the tubular element and the external wall of the upstanding element will substantially extend in the same direction allowing smooth insertion of the upstanding element into the tubular element.

An embodiment relates to an aforementioned vessel, wherein the clamping elements are located near an upper region and/or a lower region of the upstanding element. In this way, in particular bending moments are decreased at the location of the hydraulic elements whereas the effective grip on the tubular element is increased.

An embodiment relates to an aforementioned vessel, wherein an outer diameter of the base element is at least 1.5 times, preferably at least 2 times, more preferably at least 2.5 times, even more preferably 3 times as large as the outer diameter of the upstanding element. Thus, a stable base element is realized, capable of transmitting substantial bending moments and sideways forces to the deck of the vessel.

An embodiment relates to an aforementioned vessel, wherein the securing device further comprises vertical guide members moveably arranged in a vertical guide track adjacent to the clamping elements for supporting and guiding the tubular element along the upstanding element downwards to the base element, during the insertion of the upstanding element into the tubular element. The guides further support the connection between the securing device and the tubular element during insertion. It should be noted that during insertion/mounting, the guides can slide or roll down along the tubular element until they reach the base element.

An embodiment relates to a vessel wherein the upstanding element comprises an extension element that can be inserted to or removed from the upstanding element for adapting the height thereof. Thus, the height of the upstanding element can be conveniently adapted to match e.g. the height of a relatively tall tubular element.

Another aspect of the invention relates to an assembly of a vessel and a tubular element having an inner wall and an internal diameter larger than an external diameter of the upstanding element, wherein the upstanding element is inserted into a lower part of the tubular element, wherein the clamping elements are in an extended position engaging the inner wall of the tubular element.

An embodiment relates to an aforementioned assembly, wherein the tubular element has a height of at least two times the height of the upstanding element. In this height range, the securing device will be most useful.

Another aspect of the invention relates to a method for securing a tubular element on an aforementioned vessel, comprising the following steps:
a) connecting the base element of the securing device to a location on the securing surface of the deck, in such a way, that the upstanding element of the securing device is substantially perpendicular to the securing surface of the deck,
b) inserting the upstanding element into a lower part of the tubular element, such that the tubular element is at least partially arranged onto said upstanding element,
c) actuating the clamping elements, in such a way, that the clamping elements extend outwardly as to engage the inner surface of the tubular element thereby securely connecting the tubular element to the upstanding element.

By carrying out the aforementioned steps, the tubular element is arranged on the deck of the vessel in such a way that the tubular element is put in good order for being transported and installed at the offshore location.

The method can furthermore comprise the step of adapting the height of the upstanding element by inserting or removing an extension element therein or respectively therefrom.

### Brief description of the drawings

Embodiments of a vessel and a method according to the invention will by way of nonlimiting example be described in detail with reference to the accompanying drawings. In the drawings:
Fig. 1 shows a perspective view of a deck of a vessel comprising a tubular element of a transition piece mounted on a securing device on the deck of the vessel according to the invention,
Fig. 2 shows a partial cut view of the tubular element along the lines II-II of Fig. 1,
Fig. 3 shows a perspective view of the securing device according to the invention,
Fig. 4 shows a front view of the securing device according to the invention,
Fig. 5 shows a top view of the securing device according to the invention, and
Fig. 6 shows a perspective view of the wind turbine installed on a grillage on a vessel.

### Detailed description of the invention

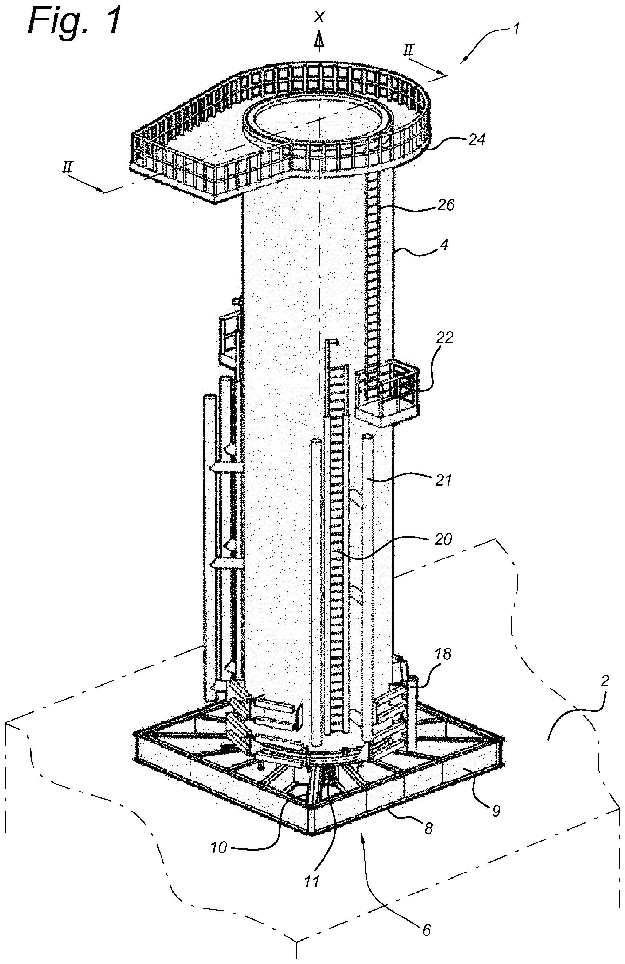

Fig. 1 shows a perspective view of a deck 2 of a vessel wherein a tubular element 4 such as a Transition Piece (TP) of a wind turbine (not shown) is connected to the deck 2. The tubular element 4 is shown in the final seagoing state, i.e. the state wherein the tubular element 4 has been secured to the deck 2 of the vessel after using a securing device 6 according to the present invention.

The vessel's deck 2 as shown, only comprises one tubular element 4, but it should be noted that this is only for illustration purposes and multiple securing devices and tubular elements can be arranged on the deck. In this embodiment, the tubular element 4 may form a base part upon which the wind turbine 3 stands during use. The tubular element 4 generally has a circular cross-section and comprise two opposing ends. It should be noted that the tubular element 4 may for instance comprise a so-called transition piece (TP). The tubular element 4 is mounted on the securing device 6 wherein the lower longitudinal end of the tubular element 4 is resting on a base element 8 of the securing device 6.

The tubular element 4 is equipped with an external work platform 24 arranged at its upper part. In order to access to the external work platform 24 a number of external ladders 20, 26 are installed, which assist maintenance personnel in accessing the wind turbine 3 during use. A couple of intermediate rest platforms 22 are provided at the external periphery of the tubular element 4, around its middle part. Handrails 21 are provided along the sides of the external ladder 20 as to improve the safety of the authorized personnel accessing the in-between platforms 22. As illustrated, the external work platform 24 projects outwardly with respect to the upper periphery of the tubular element 4. The tubular element 4 is furthermore provided with external anodes attachments 18.

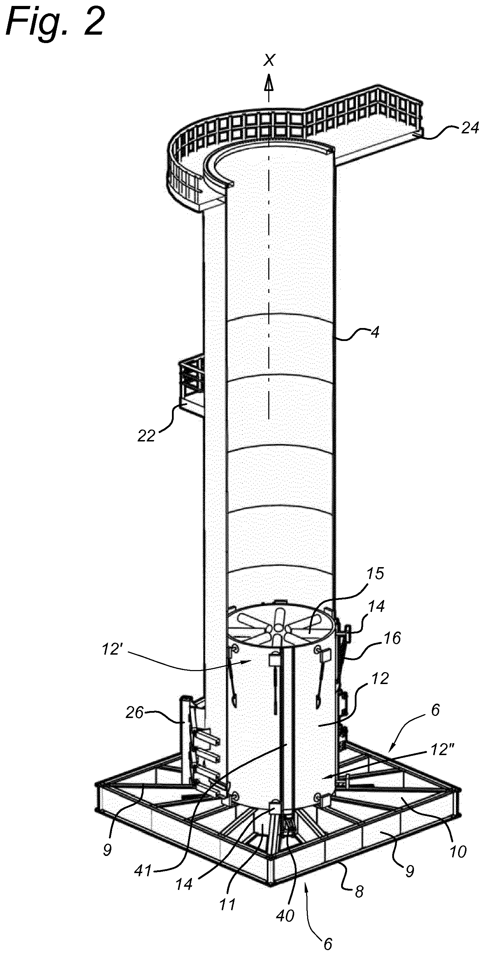

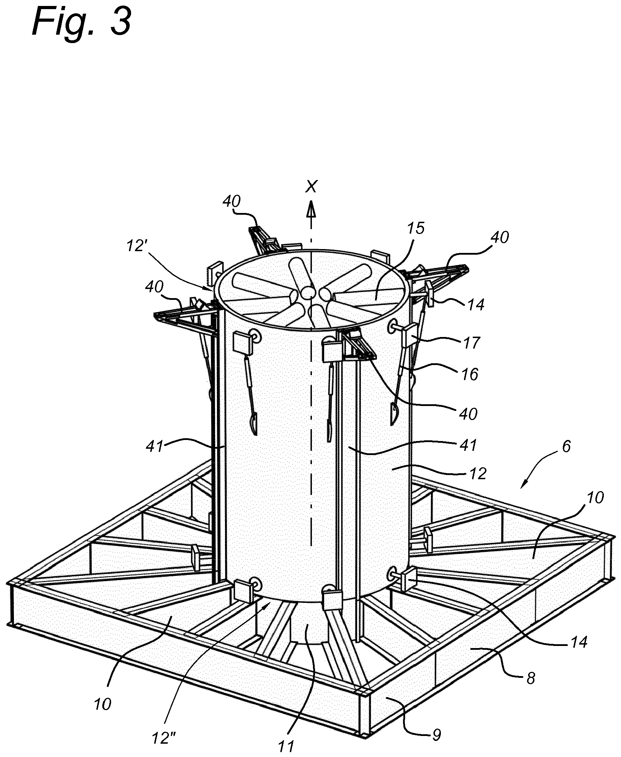

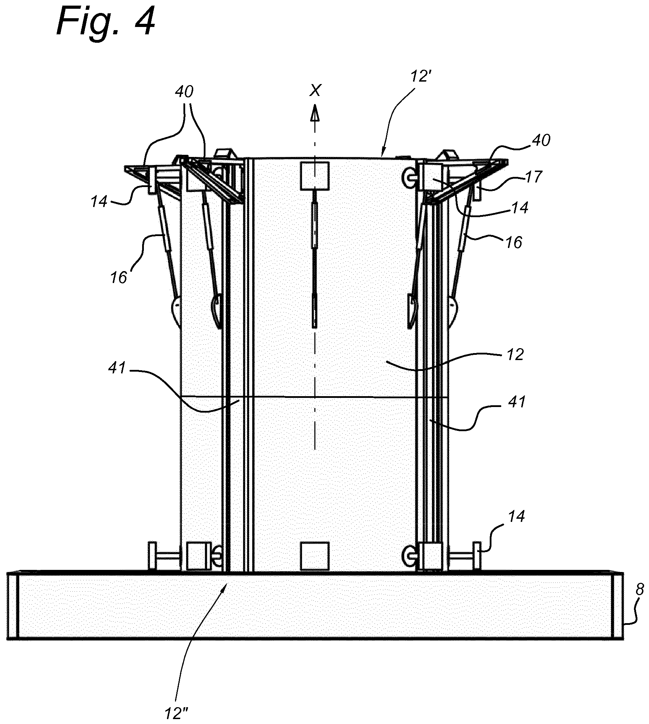

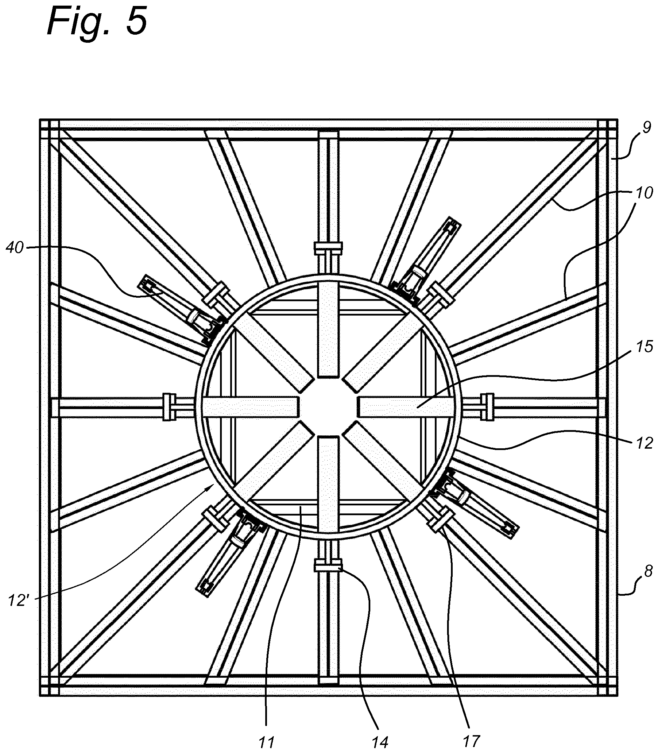

Figure 2 illustrates a partial cut of the tubular element 4 along the lines II-II of figure 1, wherein it can be seen that the securing device 6 and the tubular element 4 are in an assembled state. The securing device 6 comprises an upstanding tubular element 12 having a hollow, tubular body being connected with a lower end to the base element 8. The upstanding element 12 substantially extends along a longitudinal protrusion axis X. The base element 8 will be explained in detail with reference to figures 3-5.

As mentioned before, the securing device 6 comprises an upstanding tubular element 12 which comprises a number of clamping elements 14, such as hydraulic clamping elements. The clamping elements 14 are located close to the top and bottom peripheries 12', 12" and in the outer periphery of the upstanding tubular element 12. As illustrated, the clamping elements 14 are extended against the inner wall of the tubular element 4 as to secure the tubular element 4 during transport. Moreover, the hydraulic clamping elements 14 located at the bottom of the upstanding tubular element 12 will provide good stability of the tubular element 4 in demanding sea states. Furthermore, guide members 40 can be seen vertically slideably arranged in a guiding track 41, such as 4, to support the tubular element during insertion.

The upstanding tubular element 12 has a height of about 0.2 - 0.3 times the total height of the illustrated tubular element 4. Nevertheless, the dimensions of the upstanding tubular element 12 and the tubular element 4 may vary depending on the dimensions of the tubular element 4 itself. The height of the upstanding tubular element 12 can for instance be about 0.3 - 0.7 times the total height of the illustrated tubular element 4, or lower.

Figures 3-5 show different views of an exemplary embodiment of the securing device 6 according to the invention. The base element 8 comprises a sort of grille structure or grillage composed by an external square, rectangular, or similarly shaped frame 9 and a number of radial ribs or I-beams 10 connecting the external frame 9 with a central support part 11, upon which the upstanding tubular element 12 is partially seated. The central support part 11 preferably has a round shape (as shown) to allow vertical sliding past the circumference thereof.

As shown, the upstanding tubular element 12 comprises a top and bottom set of hydraulic clamping elements 14. The top set of the hydraulic clamping elements 14 comprise a pivoting support rod 16 providing extra support for the top set of hydraulic clamping elements 14. The support rods 16 extend from a location below a respective hydraulic clamping element 14 to a radial position on the clamping element 14.

In the hollow space of the upstanding tubular element 12 a "jack", hereafter general referred to with the expression barrel part 15 (comprising a housing or a cylinder) of the hydraulic clamping elements 14 is positioned. The hydraulic clamping elements 14 are arranged in a radial manner at a radial distance from each other. The hydraulic clamping elements 14 comprise a resilient element 17 that will be in direct contact with the inner wall of the tubular element 4 as to increase the contact surface between the hydraulic clamping elements 14 and the tubular element 4, while serving as a shock absorbing element when in use. In many situations, however, a rigid element is preferred over a resilient one. Preferably, the radial configuration of the hydraulic clamping elements 14 will be such that a subsequent hydraulic clamping element 14 is spaced at common angular intervals of about 90° away from the most adjacent hydraulic clamping element 14, more preferably about 60°, and most preferably about 45° away from the most adjacent hydraulic clamping element 14. Moreover, the number and angular distance of the top and bottom hydraulic clamping elements 14 can be adapted to respective different dimensions of the tubular element 4 and/or the securing device 6.

The base element 8 is to be connected to the deck of the vessel at the securing surface (not shown). The securing surface may comprise positioning grooves (not illustrated) of about the size and shape of the base element 8 as to allow the securing device 6 to be fittingly received and securely connected to the deck by means of fixing means e.g. nuts, bolts and rivets, for securing the securing device to the deck.

It should be noted that the hydraulic clamping elements 14 can be self-expanding clamping elements or being motorized and controlled by any suitable control means e.g. computer, as to optimize the amount of pressure executed on the inner wall of the tubular element.

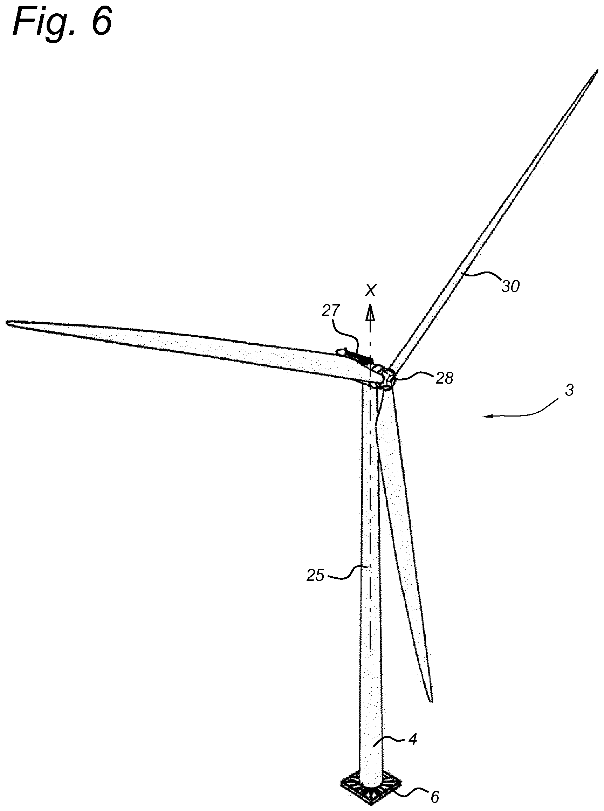

Figure 6 shows an exemplary embodiment wherein a wind turbine 3 is arranged onto the securing device 6. While not all the components of the wind turbine 3 have been shown and/or described, a typical wind turbine may include a tower or mast 25, a nacelle 27 mounted on top of the mast 25 and a rotor 28 rotatably coupled to the nacelle 27. The rotor 28 in turn may include a plurality of blades 30 connected to a hub. The blades 30 may rotate with wind energy and the rotor 28 may transfer that energy to a main shaft (not illustrated) situated within the nacelle 26. The nacelle 27 may also house several other components such as a drive train, one or more generators, various auxiliary components, a turbine control unit, and the like, which although not shown, are contemplated and considered within the scope of the present disclosure.

Thus, the invention has been described by reference to the embodiments discussed above. It will be recognized that these embodiments are susceptible to various modifications and alternative forms well known to those of skill in the art without departing from the spirit and scope of the invention. Accordingly, although specific embodiments have been described, these are examples only and are not limiting upon the scope of the invention.

### Reference numerals

1. Vessel
2. Deck
3. Wind turbine
4. Tubular element of the wind turbine
6. Securing device
8. Base element
10. Ribs
11. Central support part
12. Upstanding element
12'. Top periphery of the upstanding element
12". Bottom periphery of the upstanding element
14. Hydraulic clamping element
15. Barrel part
16. Pivoting support rod
17. Resilient element
18. Anodes attachments
20. External ladder
21. Handrail
22. Intermediate rest platform
24. External work platform
25. Mats
26. External ladder
27. Nacelle
28. Rotor
30. Blades
40. Guide member
41. Sliding track for guide member

## Claims

1. Vessel (1) for transporting a tubular element (4) to an offshore location, the vessel (1) comprising a deck (2) with a securing surface to which a securing device (6) is connected, the securing device (6) having a base element (8) for connecting the securing device (6) to the deck (2) of the vessel, wherein the securing device comprises a cylindrical or tubular upstanding element (12) protruding upwards from the base element (8) along a longitudinal protrusion axis (X), the upstanding element (12) being provided with at least a couple of clamping elements (14) at a distance, along the protrusion axis, from the base element (8), wherein the clamping elements (14) can be retracted or extended in a radial direction, i.e. a direction perpendicular to the protrusion axis, **characterized in that** the clamping elements (14) are arranged at a location on a circumferential outer surface of the upstanding element (12) for engaging an inner wall of the tubular element (4) having an internal diameter larger than an external diameter of the upstanding element (12), when the upstanding element (12) is inserted into a lower part of the tubular element (4) and when the clamping elements (14) are in an extended position.

2. Vessel (1) according to claim 1, wherein a retraction/extension distance between the rectracted and extended positions of the clamping elements (14) lies in the range of 0.1 - 5.0 m.

3. Vessel (1) according to claim 1 or 2, wherein the clamping elements (14) are hydraulic clamping elements.

4. Vessel (1) according to claim 1, 2 or 3, wherein the clamping elements (14) are self-expanding clamping elements or motorized clamping elements.

5. Vessel (1) according to any one of the claims 1-4, wherein the base element (8) extends in a plane parallel to the deck of the vessel (1) and has a grille structure comprising several connecting points for connecting the securing device to the deck.

6. Vessel (1) according to any one of the preceding claims, wherein the hydraulic clamping elements (14) comprise a resilient element (17) at their outer ends for engaging the inner wall of the tubular element (4).

7. Vessel (1) according to any one of the preceding claims, wherein the upstanding element (12) is a tubular upstanding element.

8. Vessel (1) according to any one of the preceding claims, wherein the clamping elements (14) are located near an upper region (12', 12") and/or a lower region of the upstanding element (12).

9. Vessel (1) according to any one of the preceding claims, wherein an outer diameter of the base element (8) is at least 1.5 times, preferably 2 times, as large as the outer diameter of the upstanding element (12).

10. Vessel (1) according to any one of the preceding claims, wherein the securing device (6) further comprises vertical guide members (40) moveably arranged in a vertical guide track (41) adjacent to the clamping elements (14) for supporting and guiding the tubular element (4) along the upstanding element (12) downwards to the base element (8), during the insertion of the upstanding element (12) into the tubular element (4).

11. Vessel (1) according to any one of the preceding claims, wherein the upstanding element (12) comprises an extension element that can be inserted to or removed from the upstanding element for adapting the height thereof.

12. Assembly of a vessel (1) according to any one of the preceding claims and a tubular element (4) having an inner wall and an internal diameter larger than an external diameter of the upstanding element (12), wherein the upstanding element (12) is inserted into a lower part of the tubular element (4), wherein the clamping elements (14) are in an extended position engaging the inner wall of the tubular element (4).

13. Assembly according to claim 12, wherein the tubular element (4) has a height of at least two times the height of the upstanding element (12).

14. Method for securing a tubular element (4) on a vessel (1) according to any one of the claims 1-11, comprising the following steps:
a) connecting the base element (8) of the securing device (6) to a location on the securing surface of the deck (2), in such a way, that the upstanding element (12) of the securing device (6) is substantially perpendicular to the securing surface of the deck (2),
b) inserting the upstanding element (12) into a lower part of the tubular element (4), such that the tubular element (4) is at least partially arranged onto said upstanding element (12),
c) actuating the clamping elements (14), in such a way, that the clamping elements extend outwardly as to engage the inner surface of the tubular element (4) thereby securely connecting the tubular element (4) to the upstanding element (12).

15. Method according to claim 14, comprising the step of adapting the height of the upstanding element (12) by inserting or removing an extension element therein or respectively therefrom.

## Patentansprüche

1. Schiff (1) zum Transport eines rohrförmigen Elements (4) zu einer Offshore-Stelle, wobei das Schiff (1) ein Deck (2) mit einer Befestigungsfläche umfasst, mit der eine Befestigungsvorrichtung (6) verbunden ist, wobei die Befestigungsvorrichtung (6) ein Basiselement (8) zum Verbinden der Befestigungsvorrichtung (6) mit dem Deck (2) des Schiffs aufweist, wobei die Befestigungsvorrichtung ein zylindrisches oder rohrförmiges, aufrechtes Element (12) aufweist, das von dem Basiselement (8) entlang einer Längsvorsprungsachse (X) nach oben vorsteht, wobei das aufrechte Element (12) mit mindestens einem Paar von Klemmelementen (14) in einem Abstand entlang der Vorsprungsachse von dem Basiselement (8) versehen ist, wobei die Klemmelemente (14) in radialer Richtung ein- oder ausgefahren werden können, das heißt, in einer Richtung senkrecht zur Vorsprungsachse, **dadurch gekennzeichnet, dass** die Klemmelemente (14) an einer Stelle an einer umlaufenden Außenfläche des aufrechten Elements (12) angeordnet sind, um mit einer Innenwand des rohrförmigen Elements (4) in Eingriff zu kommen, die einen Innendurchmesser aufweist, der größer ist als ein Außendurchmesser des aufrechten Elements (12), wenn das aufrechte Element (12) in einen unteren Teil des rohrförmigen Elements (4) eingesetzt wird und wenn sich die Klemmelemente (14) in einer ausgefahrenen Position befinden.

2. Schiff (1) nach Anspruch 1, wobei ein Ein-/Ausfahrabstand zwischen den ein- und ausgefahrenen Positionen der Klemmelemente (14) im Bereich von 0,1 - 5,0 m liegt.

3. Schiff (1) nach Anspruch 1 oder 2, wobei die Klemmelemente (14) hydraulische Klemmelemente sind.

4. Schiff (1) nach Anspruch 1, 2 oder 3, wobei die Klemmelemente (14) selbstausfahrende Klemmelemente oder motorisierte Klemmelemente sind.

5. Schiff (1) nach einem der Ansprüche 1 bis 4, wobei sich das Basiselement (8) in einer Ebene parallel zum Deck des Schiffs (1) erstreckt und eine Gitterstruktur aufweist, die mehrere Verbindungspunkte zum Verbinden der Befestigungsvorrichtung mit dem Deck umfasst.

6. Schiff (1) nach einem der vorhergehenden Ansprüche, wobei die hydraulischen Klemmelemente (14) an ihren äußeren Enden ein federndes Element (17) zum Eingriff mit der Innenwand des rohrförmigen Elements (4) aufweisen.

7. Schiff (1) nach einem der vorhergehenden Ansprüche, wobei das aufrechte Element (12) ein rohrförmiges, aufrechtes Element ist.

8. Schiff (1) nach einem der vorhergehenden Ansprüche, wobei die Klemmelemente (14) nahe einem oberen Bereich (12', 12") und/oder einem unteren Bereich des aufrechten Elements (12) angeordnet sind.

9. Schiff (1) nach einem der vorhergehenden Ansprüche, wobei ein Außendurchmesser des Basiselementes (8) mindestens 1,5-mal, vorzugsweise 2-mal so groß ist wie der Außendurchmesser des aufrechten Elements (12).

10. Schiff (1) nach einem der vorhergehenden Ansprüche,
wobei die Befestigungsvorrichtung (6) ferner vertikale Führungselemente (40) umfasst, die in einer vertikalen Führungsbahn (41) benachbart zu den Klemmelementen (14) beweglich angeordnet sind, um das rohrförmige Element (4) entlang des aufrechten Elements (12) abwärts zum Basiselement (8) während des Einsetzens des aufrechten Elements (12) in das rohrförmige Element (4) zu tragen und zu führen.

11. Schiff (1) nach einem der vorhergehenden Ansprüche, wobei das aufrechte Element (12) ein Ausfahrelement umfasst, das in das aufrechte Element eingesetzt oder von diesem entfernt werden kann, um dessen Höhe anzupassen.

12. Baugruppe eines Schiffs (1) nach einem der vorhergehenden Ansprüche und rohrförmiges Element (4) mit einer Innenwand und einem Innendurchmesser, der größer als ein Außendurchmesser des aufrechten Elements (12) ist, wobei das aufrechte Element (12) in einen unteren Teil des rohrförmigen Elements (4) eingesetzt ist, wobei sich die Klemmelemente (14) in einer ausgefahrenen Position in Eingriff mit der Innenwand des rohrförmigen Elements (4) befinden.

13. Baugruppe nach Anspruch 12, wobei das rohrförmige Element (4) eine Höhe von mindestens dem Zweifachen der Höhe des aufrechten Elements (12) aufweist.

14. Verfahren zum Befestigen eines rohrförmigen Elements (4) an einem Gefäß (1) nach einem der Ansprüche 1 bis 11, wobei das Verfahren folgende Schritte umfasst:
a) Verbinden des Basiselements (8) der Befestigungsvorrichtung (6) mit einer Stelle auf der Befestigungsfläche des Decks (2), so dass das aufrechte Element (12) der Befestigungsvorrichtung (6) im Wesentlichen senkrecht zur Befestigungsfläche des Decks (2) angeordnet ist,
b) Einsetzen des aufrechten Elements (12) in einen unteren Teil des rohrförmigen Elements (4), so dass das rohrförmige Element (4) mindestens teilweise auf dem aufrechten Element (12) angeordnet ist,
c) Betätigen der Klemmelemente (14), so dass sich die Klemmelemente nach außen erstrecken, um mit der Innenfläche des rohrförmigen Elements (4) in Eingriff zu kommen, wodurch das rohrförmige Element (4) mit dem aufrechten Element (12) fest verbunden wird.

15. Verfahren nach Anspruch 14, das den Schritt des Anpassens der Höhe des aufrechten Elements (12) durch Einsetzen oder Entfernen eines Ausfahrelements darin bzw. von diesem umfasst.

## Revendications

1. Navire (1) destiné à transporter un élément tubulaire (4) vers un emplacement offshore, le navire (1) comprenant un pont (2) avec une surface d'arrimage à laquelle est raccordé un dispositif d'arrimage (6), le dispositif d'arrimage (6) possédant un élément de base (8) pour raccorder le dispositif d'arrimage (6) au pont (2) du navire, cas dans lequel le dispositif d'arrimage comprend un élément dressé cylindrique ou tubulaire (12) qui fait saillie vers le haut à partir de l'élément de base (8) le long d'un axe de saillie longitudinal (X), l'élément dressé (12) étant pourvu d'au moins deux éléments de serrage (14) à une certaine distance, le long de l'axe de saillie, par rapport à l'élément de base (8), cas dans lequel les éléments de serrage (14) peuvent être rétractés ou déployés suivant une direction radiale, à savoir une direction perpendiculaire à l'axe de saillie, **caractérisé en ce que** les éléments de serrage (14) sont agencés au niveau d'un emplacement sur une surface externe circonférentielle de l'élément dressé (12) en vue d'une solidarisation avec une paroi interne de l'élément tubulaire (4) ayant un diamètre intérieur qui est plus grand qu'un diamètre extérieur de l'élément dressé (12), lorsque l'élément dressé (12) est inséré dans une partie inférieure de l'élément tubulaire (4) et lorsque les éléments de serrage (14) se trouvent dans une position déployée.

2. Navire (1) selon la revendication 1, une distance de rétraction/déploiement entre les positions rétractée et déployée des éléments de serrage (14) se situant dans la gamme de 0,1 à 5,0 m.

3. Navire (1) selon la revendication 1 ou 2, les éléments de serrage (14) étant des éléments de serrage hydrauliques.

4. Navire (1) selon la revendication 1, 2 ou 3, les éléments de serrage (14) étant des éléments de serrage à auto-expansion ou des éléments de serrage motorisés.

5. Navire (1) selon l'une quelconque des revendications 1 à 4, l'élément de base (8) s'étendant dans un plan parallèle au pont du navire (1) et possédant une structure de grille comprenant plusieurs points de raccordement pour raccorder le dispositif d'arrimage au pont.

6. Navire (1) selon l'une quelconque des revendications précédentes, les éléments de serrage hydraulique (14) comprenant un élément élastique (17) au niveau de leurs extrémités externes pour se solidariser avec la paroi interne de l'élément tubulaire (4).

7. Navire (1) selon l'une quelconque des revendications précédentes, l'élément dressé (12) étant un élément dressé tubulaire.

8. Navire (1) selon l'une quelconque des revendications précédentes, les éléments de serrage (14) étant localisés près d'une région supérieure (12', 12") et/ou d'une région inférieure de l'élément dressé (12).

9. Navire (1) selon l'une quelconque des revendications précédentes, un diamètre extérieur de l'élément de base (8) étant au moins 1,5 fois, de préférence 2 fois, plus grand que le diamètre extérieur de l'élément dressé (12).

10. Navire (1) selon l'une quelconque des revendications précédentes, le dispositif d'arrimage (6) comprenant en outre des éléments de guidage verticaux (40) agencés de manière mobile dans une voie de guidage verticale (41) adjacente aux éléments de serrage (14) pour soutenir et guider l'élément tubulaire (4) le long de l'élément dressé (12) vers le bas jusqu'à l'élément de base (8), au cours de l'insertion de l'élément dressé (12) dans l'élément tubulaire (4).

11. Navire (1) selon l'une quelconque des revendications précédentes, l'élément dressé (12) comprenant un élément d'extension qui peut être inséré dans l'élément dressé ou être enlevé de ce dernier pour adapter la hauteur de celui-ci.

12. Ensemble d'un navire (1) selon l'une quelconque des revendications précédentes et d'un élément tubulaire (4) possédant une paroi interne et un diamètre intérieur qui est plus grand qu'un diamètre extérieur de l'élément dressé (12), cas dans lequel l'élément dressé (12) est inséré dans une partie inférieure de l'élément tubulaire (4), cas dans lequel les éléments de serrage (14) se trouvent en position déployée en solidarisation avec la paroi interne de l'élément tubulaire (4).

13. Ensemble selon la revendication 12, l'élément tubulaire (4) possédant une hauteur au moins deux fois égale à la hauteur de l'élément dressé (12).

14. Procédé pour arrimer un élément tubulaire (4) sur un navire (1) selon l'une quelconque des revendications 1 à 11, comprenant les étapes suivantes consistant à :
a) raccorder l'élément de base (8) du dispositif d'arrimage (6) à un emplacement sur la surface d'arrimage du pont (2), de telle manière que l'élément dressé (12) du dispositif d'arrimage (6) soit sensiblement perpendiculaire à la surface d'arrimage du pont (2),
b) insérer l'élément dressé (12) dans une partie inférieure de l'élément tubulaire (4), de telle sorte que l'élément tubulaire (4) soit au moins partiellement agencé sur ledit élément dressé (12),
c) actionner les éléments d'arrimage (14), de telle manière que les éléments de serrage se déploient vers l'extérieur de sorte à se solidariser avec la surface interne de l'élément tubulaire (4), ce qui permet ainsi de raccorder fermement l'élément tubulaire (4) à l'élément dressé (12).

15. Procédé selon la revendication 14, comprenant l'étape consistant à adapter la hauteur de l'élément dressé (12) en insérant ou en enlevant un élément d'extension dans celui-ci ou respectivement à partir de celui-ci.
